# EUROPÄISCHE PATENTANMELDUNG

(11) **EP 1 089 037 A2**
(43) Veröffentlichungstag der Anmeldung: **04.04.2001**
(21) Anmeldenummer: 00121001.2
(22) Anmeldetag: 27.09.2000
(51) Int. Cl.: F21V 17/00

(54) **Lichtelement**

(30) Priorität: 28.09.1999 DE 19946313
(71) Anmelder: Brakel Aero GmbH, 46562 Voerde (DE)
(72) Erfinder: Scholz, K.H., 63768 Hösbach (DE); Eberhard, Wolfgang, 61118 Bad Vilbel (DE); Riddermann, Peter, 47589 Uedem (DE)
(74) Vertreter: Busse & Busse Patentanwälte

(57) **Zusammenfassung**

Die Erfindung betrifft ein Lichtelement (1) mit wenigstens zwei lichtdurchlässigen Platten (2), die voneinander durch ein Rahmenprofil (3) beabstandet und auf diesem durch Verklebung festgelegt sind, wobei die Verklebung durch ein beidseitig mit Acrylkleber beschichtetes Schaumband (7) aus geschlossenzelligem Schaumstoff ausgebildet ist. Vorzugsweise sind die den Platten (2) zugewandten Oberflächen (9) des Rahmenprofils (3) gerillt ausgebildet das Lichtelement kann eine Brandschutzbeschichtung aufweisen.

## Beschreibung

Die Erfindung betrifft ein Lichtelement mit voneinander durch ein Rahmenprofil beabstandeten und an diesem festgelegten lichtdurchlässigen Platten nach dem Oberbegriff des Anspruchs 1.

Derartige Lichtelemente sind aus der Praxis bekannt, wobei die meist aus Kunststoff bestehenden Platten beidseitig auf ein Rahmenprofil mit einem durch Erwärmung verflüssigten Klebstoff, z.B. Phenolharzkleber, aufgeklebt werden. Durch die Verklebung mit dem normalerweise aus Aluminium bestehenden Rahmenprofil können bei Temperaturveränderungen durch unterschiedliche Ausdehnungen der verschiedenen Materialien thermische Spannungen auftreten, die zu einer Zerstörung des Lichtelementes führen könnten. Daher können die vorbekannten Lichtelemente nur in verhältnismäßig kleinen Abmessungen und mit speziellen Kunststoffen hergestellt werden, deren Dehnungsverhalten dem von Aluminium ähnelt. Dies ist in der Regel Polyester, vornehmlich Duroplast.

Zwar sind bereits andere Lichtelemente bekannt, bei denen Polycarbonatplatten Verwendung finden, die nicht auf ein Rahmenprofil aufgeklebt, sondern in entsprechenden Ausnehmungen des Rahmenprofils schwimmend gelagert sind, so daß Wärmedehnungen ausgeglichen werden können. Diese Lichtelemente sind jedoch weniger stabil und lassen sich schlechter gegen Witterungseinflüsse wie z.B. Regen abdichten.

Wegen ihrer Stabilität sind daher die gattungsgemäßen Lichtelemente zu bevorzugen, obwohl diese auch unter akustischen Gesichtspunkten und hinsichtlich ihrer Wärmedämmeigenschaft nicht optimal sind, da der thermisch verflüssigbare Klebstoff zum einen sehr schallhart ist und zum anderen eine Kältebrücke zu dem Aluminiumprofil bildet.

Die Erfindung befaßt sich daher mit dem Problem, ein gegenüber den gattungsgemäßen Lichtelementen in thermischen und akustischen Eigenschaften verbessertes Lichtelement hoher Stabilität zu schaffen, das einfach und preisgünstig zu fertigen ist.

Erfindungsgemäß wird dieses Problem durch ein Lichtelement mit den Merkmalen des Anspruchs 1 gelöst.

Durch die Verwendung eines beidseitig mit Klebstoff beschichteten Schaumbandes statt des bisher verwendeten Klebers bleibt die Stabilität des Lichtelementes erhalten, wobei durch die Flexibilität des Schaumbandes Scherkräfte aufgenommen werden können und eine Ausgleichsmöglichkeit für thermische Spannungen zwischen dem Rahmenprofil und den Platten geschaffen wird. Darüber hinaus bildet das Schaumband zwischen dem Rahmenprofil und den Platten eine sowohl wärme- als auch schalldämmende Schicht aus, was auch in dieser Hinsicht zu einer Verbesserung der Eigenschaften des Lichtelementes führt.

Vorzugsweise sollte das Schaumband aus geschlossenzelligem Schaumstoff ohne hygroskopische Anteile bestehen, damit das Schaumband beim praktischen Einsatz der Lichtelemente keine Feuchtigkeit zieht und somit nicht zu Problemen hinsichtlich der Dichtigkeit der Lichtelemente führt. Besonders geeignet ist hier der Einsatz von aufgeschäumtem Polyethylen. Als Klebstoff zur Beschichtung des Schaumbandes zeigen Acrylkleber gute Eigenschaften, da sie sowohl mit dem Schaumband als auch mit dem Rahmenprofil und den Platten eine feste Verbindung bilden.

Weitere Vorteile und Einzelheiten ergeben sich aus den Unteransprüchen und einem in den Zeichnungen dargestellten Ausführungsbeispiel der Erfindung, das im folgenden beschrieben wird; es zeigen:
- Fig. 1: zwei miteinander verbundene erfindungsgemäße Lichtelemente im Schnitt,
- Fig. 2: eine Vergrößerung des Ausschnitts II in Fig. 1,
- Fig. 3: ein Rahmenprofil eines erfindungsgemäßen Lichtelementes im Schnitt und
- Fig. 4: eine Vergrößerung des Ausschnitts IV in Fig. 3.

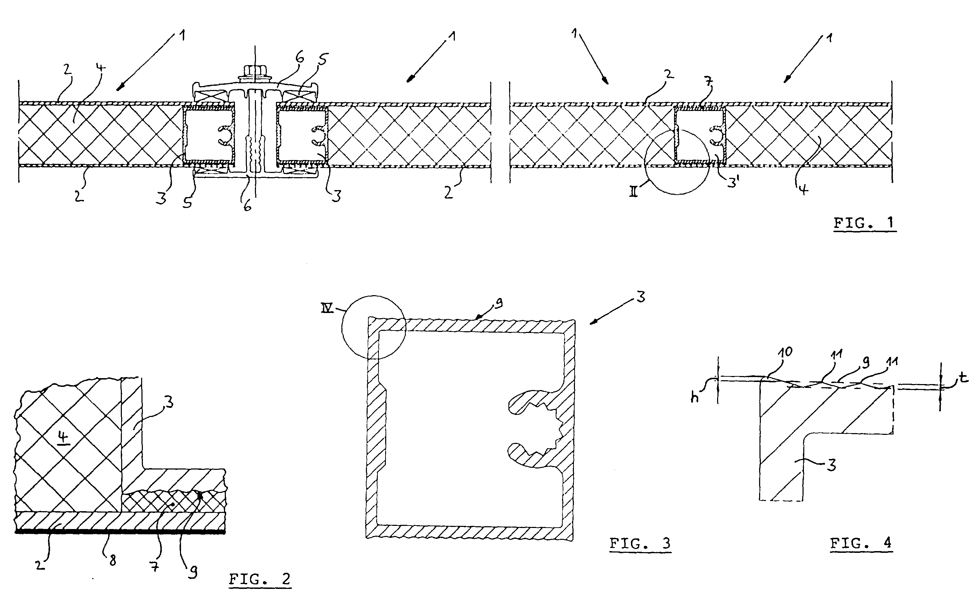

Die in Fig. 1 dargestellten Lichtelemente 1 weisen zwei lichtdurchlässige Platten 2 auf, die durch in ihren Randbereichen angeordnete Rahmenprofile 3 voneinander beabstandet sind. Lichtelemente mit einer sehr großen Spannweite, wie das in der Fig. rechts dargestellte, können zur Unterstützung zusätzlich zu den seitlichen Rahmenprofilen 3 noch weitere Rahmenprofile 3' im Mittelbereich des Lichtelementes 1 aufweisen. In dem zwischen den beiden Platten 2 gebildeten Zwischenraum kann sich ein lichtdurchlässiger Dämmstoff 4, vorzugsweise Glasfasergespinst, befinden. Mehrere Lichtelemente sind miteinander über mit Dichtungen 5 versehene Verbindungselemente 6 verbunden.

Wie in Fig. 2 erkennbar ist, sind die Platten 2 auf die Rahmenprofile 3 aufgeklebt, indem zwischen dem jeweiligen Bereich der Kunststoffplatte 2 und des Rahmenprofils 3 ein beidseitig mit Klebstoff beschichtetes Schaumband 7 eingefügt ist.

Fig. 2 zeigt außerdem eine bei der dargestellten Ausführungsform auf der Außenseite der Platten 2 aufgebrachte Brandschutzbeschichtung 8. Diese besteht vorzugsweise aus einem thermisch expandierbaren Material, das bei Hitzeeinwirkung durch Feuer oder starke Strahlung aufschäumt und so durch Oberflächenvergrößerung und eine wärmedämmende Schaumschicht die Kunststoffplatte 2 vor Brandeinwirkung schützt. Zum zusätzlichen Schutz des meist aus Aluminium bestehenden Rahmenprofils 3 kann auch das Schaumband 7 aus einem flammhemmend ausgerüsteten Material bestehen.

Bei einer bevorzugten Ausführungsform des Lichtelementes sind die den Platten 2 zugewandten Oberflächen 9 des Rahmenprofils 3 aufgerauht bzw. profiliert ausgebildet. Dadurch vergrößert sich die mit dem klebenden Schaumband 7 in Kontakt stehende Oberfläche und die Haftung wird verbessert. Da das Schaumband flexibel und punktuell oder bereichsweise stauchbar ausgebildet ist, können durch die Aufrauhung bzw. Profilierung ausgebildete Höhenunterschiede der Oberfläche 9 durch das Schaumband 7 ausgeglichen werden. Bei dem Rahmenprofil 3 handelt es sich meist um ein stranggezogenes Profil; zur einfachen Fertigung ist die Oberfläche 9 daher vorzugsweise wie in den Fig. 3 und 4 dargestellt gerillt ausgebildet.

Eine gute Anpassung an die gerillte Oberfläche 9 durch das Schaumband 7 wird erreicht, wenn die Tiefe t 1 % bis 40% der Dicke des Schaumbandes 7 beträgt. Bevorzugt ist eine Rillentiefe t von 2% bis 30%, insbesondere 10% bis 20% der Schaumbanddicke. Insbesondere bei einer Rillentiefe t von 15% der Schaumbanddicke wird ein sehr gutes Verhältnis zwischen der durch die Rillung erzielten Oberflächenvergrößerung und den von dem Schaumband 7 auszugleichenden Höhendifferenzen erreicht.

Die Dicke des verwendeten Schaumbandes 7 sollte bevorzugt zwischen 0,3 mm und 3 mm liegen, da dünnere Schaumbänder keine ausreichende Dämpfung und Aufnahme von Scherkräften gewährleisten, während dicker als 3 mm ausgelegte Schaumbänder Schwachstellen bilden, in denen die Platten 2 durch Krafteinwirkung von den Rahmenprofilen 3 getrennt werden könnten, wenn das Schaumband 7 zwischen seinen beiden klebstoffbeschichteten Seiten reißt.

Vorzugsweise sind die Kanten 10 des Rahmenprofils 3 wie in Fig. 4 dargestellt gegenüber der übrigen den Platten 2 zugewandten Oberfläche 9 erhöht ausgebildet, wobei bei einer gerillten Oberfläche 9 von deren höchsten Punkten 11 ausgegangen wird. Dadurch wird das Schaumband 7 in seinen Randzonen stärker gequetscht und bildet somit eine bessere Abdichtung sowie eine festere Lagerung der Platten 2. Außerdem erleichtert die erhöhte Ausbildung der Kanten 10 das Aufbringen des Schaumbandes 7, da dieses gleichsam von den Kanten 10 begrenzt und geführt wird. Die Kantenhöhe h sollte vorzugsweise maximal der halben Dicke des Schaumbandes 7 entsprechen, da so eine ausreichende Verdichtung des Schaumbandes erreicht wird, ohne daß dieses zu stark gequetscht wird. Fertigungstechnisch und hinsichtlich der Verklebung des Rahmenprofils 3 mit den Platten 2 ist es vorteilhaft, wenn die Kantenhöhe h der Tiefe t der in der Oberfläche 9 des Rahmenprofils 3 ausgebildeten Rillen entspricht.

## Patentansprüche

1. Lichtelement (1) mit wenigstens zwei lichtdurchlässigen Platten (2), die voneinander durch ein Rahmenprofil (3) beabstandet und auf diesem durch Verklebung festgelegt sind, **dadurch gekennzeichnet**, daß die Verklebung durch ein beidseitig mit Klebstoff beschichtetes Schaumband (7) gebildet wird.

2. Lichtelement nach Anspruch 1, **dadurch gekennzeichnet**, daß der Klebstoff ein Acrylkleber ist.

3. Lichtelement nach Anspruch 1 oder 2, **dadurch gekennzeichnet**, daß das Schaumband (7) aus geschlossenzelligem Schaumstoff besteht.

4. Lichtelement nach einem der nach Ansprüche 1 bis 3, **dadurch gekennzeichnet**, daß die den Platten (2) zugewandten Oberflächen (9) des Rahmenprofils (3) gerillt ausgebildet sind.

5. Lichtelement nach Anspruch 4, **dadurch gekennzeichnet**, daß die Tiefe (t) der in der Oberfläche (9) des Rahmenprofils (3) ausgebildeten Rillen 1 % bis 40 % der Dicke des Schaumbandes (7) entspricht.

6. Lichtelement nach Anspruch 5, **dadurch gekennzeichnet**, daß die Rillentiefe (t) 2 % bis 30 % der Dicke des Schaumbandes (7) entspricht.

7. Lichtelement nach Anspruch 6, **dadurch gekennzeichnet**, daß die Rillentiefe (t) 10 % bis 20 % der Dicke des Schaumbandes (7) entspricht.

8. Lichtelement nach einem der Ansprüche 1 bis 7, **dadurch gekennzeichnet**, daß die Dicke der Schaumbandes (7) 0,3 mm bis 3 mm beträgt.

9. Lichtelement nach einem der Ansprüche 1 bis 8, **dadurch gekennzeichnet**, daß die den Platten (2) zugewandten Kanten (10) des Rahmenprofils (3) gegenüber der übrigen den Platten (2) zugewandten Oberfläche (9) erhöht ausgebildet sind.

10. Lichtelement nach Anspruch 9, **dadurch gekennzeichnet**, daß die Kantenhöhe (h) bis zu 50 % der Dicke des Schaumbandes (7) entspricht.

11. Lichtelement nach einem der Ansprüche 4 bis 7 und Anspruch 9, **dadurch gekennzeichnet**, daß die Kantenhöhe (h) der Tiefe (t) der in der Oberfläche (9) des Rahmenprofils (3) ausgebildeten Rillen entspricht.

12. Lichtelement nach einem der Ansprüche 1 bis 11, **dadurch gekennzeichnet**, daß das Schaumband (7) aus Polyethylen besteht.

13. Lichtelement nach einem der Ansprüche 1 bis 12, **dadurch gekennzeichnet**, daß das Schaumband (7) aus einem flammhemmend ausgerüsteten Material besteht.

14. Lichtelement nach einem der Ansprüche 1 bis 13, **dadurch gekennzeichnet**, daß wenigsten eine der Platten (2) zumindest auf ihrer der anderen Platte (2) abgewandten Seite mit einer Brandschutzbeschichtung (8) versehen ist.

15. Lichtelement nach Anspruch 14, **dadurch gekennzeichnet**, daß die Brandschutzbeschichtung (8) aus einem thermisch expandierbaren Material besteht.
